# EUROPEAN PATENT APPLICATION

(11) **EP 3 205 817 A1**
(43) Date of publication of application: **16.08.2017**
(21) Application number: 16154850.8
(22) Date of filing: 09.02.2016
(51) Int. Cl.: F01D 5/06, F01D 5/08, F01D 25/12, F02C 7/12

(54) **FLUID COOLED ROTOR FOR A GAS TURBINE**

(71) Applicant: Ansaldo Energia Switzerland AG, 5401 Baden (CH)
(72) Inventor: Boeller, Stefan, 5400 Baden (CH); Jemora, Daniel, 5400 Baden (CH)
(74) Representative: General Electric Technology GmbH

(57) **Abstract**

The present disclosure relates to a rotor (10) for a gas turbine comprising: a plurality of rotor disks (14) arranged one behind the other in a rotor axis (5) and connected to one another, the geometrical form of the disks leads to the formation of cavities (23) between the respectively adjacent disks (15,16), the rotor extends from a compressor part (11) to a turbine part (13) and has a central part (12) between the compressor part (11) and the turbine part (13), wherein the first turbine disk (16), the last compressor disk (17) and the central part (12) enclose a central cavity(25); a cooling system extending at least partially through the rotor (10) comprising at least one inlet pipe (30) configured to receive a cooling fluid, at least one outlet pipe (31) configured to guide the cooling fluid outside the rotor (10) and at least one central cooling section (32) disposed between at least one inlet pipe (30) and at least one outlet pipe (31), wherein the central cooling section (24) is extending at least partially through the first turbine disk (16) and/or the last compressor disk (17).

## Description

### Technical field

The present disclosure relates to the technical field of gas turbines. It relates mostly to a rotor for a gas turbine, wherein the rotor comprises a plurality of rotor disks arranged one behind the other in a rotor axis. The present disclosure relates more particularly to rotors comprising a cooling system.

### Background of the disclosure

Rotors for gas turbines usually comprise a plurality of disks which are either joined together by means of bolted connections or they are welded together. In order to avoid overheating during operation and consequently to avoid reduction of the service life of the rotors which is brought about, the rotors are actively cooled. In this case, there is a difference between cooling methods for rotors which are connected by bolts and for welded rotors. The cooling methods for bolted rotors can be used in the case of welded rotors only to a limited extent because the rotor disks in the case of welded rotors are more solid in comparison to bolted rotors and internal cooling via holes would be more difficult to realize. In addition, welded rotors have a bigger thermal inertia.

Traditionally, rotors for gas turbines are cooled with the air flows supplied from the compressor of the gas turbine or from the external cooling source. The existing solutions require cooling with secondary air flows (SAF).The cooling with secondary air flows from the gas turbine is disadvantageous for several reasons. First, this solution is not closed loop system (not pressure independent), and secondly it is using valuable cooling air from the compressor, which reduces overall efficiency.

US8820091 describes a cooling system for a rotor of a gas turbine using external cooling source. A cooling fluid air injection system includes an external cooling fluid source, at least one rotor cooling pipe, which is used to inject cooling fluid from the source into a rotor chamber. However, this closed loop system is cooling only the outer surface of the rotor. In this example, no fluid is entering the rotating system of the turbine.

For welded rotors, various cooling devices with cooling passages and cooling chambers inside and outside the rotor are known. For example, EP0984138 discloses a rotor for a gas turbine, especially for a compressor, the surface of which is impinged upon by cooling streams. The cooling streams are guided via air passages through the stator blades and through openings in their blade tips directly to the rotor surface. EP1705339 discloses a rotor for a gas turbine with radially extending cooling air passages, these having an elliptical cross section.

Taking in the consideration existing solution, there is a still need for efficient cooling systems especially for welded gas turbine rotors.

### Summary of the disclosure

It is therefore the main objective of the disclosure to provide a rotor for a gas turbine which avoids the disadvantages of known rotors and in particular enables an efficient cooling.

According to one embodiment of the invention, a rotor for a gas turbine is provided comprising a plurality of rotor disks arranged one behind the other in a rotor axis and connected to one another. The geometrical form of the disks leads to the formation of cavities between the respectively adjacent disks, and the rotor extends from a compressor part to a turbine part and has a central part between the compressor part and the turbine part, wherein the first turbine disk, the last compressor disk and the central part enclose a central cavity. The rotor comprises a cooling system extending at least partially through the rotor comprising at least one inlet pipe configured to receive a cooling fluid, at least one outlet pipe configured to guide the cooling fluid outside the rotor and at least one central cooling section disposed between at least one inlet pipe and at least one outlet pipe, wherein the central cooling section is extending at least partially through the first turbine disk and/or the last compressor disk.

According to another embodiment of the invention, at least two rotor disks are welded together or all disks are welded together i.e. the rotor is welded rotor. Each of the compressor part and the turbine part comprises at least two rotor disks. In addition, the central part comprises a rotor drum.

According to yet another embodiment, the inlet pipe and/or the outlet pipe may be positioned along the central axis of the rotor, or they may be position off the central axis of the rotor.

According to another embodiment of the invention, the inlet pipe is extending through the turbine part or the compressor part, and the outlet pipe is extending through the compressor part or the turbine part.

According to yet another embodiment, at least part of the inlet pipe is positioned inside the outlet pipe.

According to another embodiment, the cooling system may comprise some of the cavities between the disks, preferably the first turbine cavity and the last compressor cavity.

According to yet another embodiment, the central cooling section comprises at least one central pipe extending through the central part, for example the central pipe may be extending at least twice through the first turbine disk, the last compressor disk and the rotor drum, or the central pipe may be extending only through the upper half or the lower half of the rotor drum.

According to another embodiment, the central pipe is extending through the central cavity.

According to yet another preferred embodiment, the central cooling part comprises a cooling ring, the cooling ring is positioned at least partially outside the rotor disks, and preferably the cooling ring surrounds circumferentially the rotor drum.

According to another embodiment, the cooling system is symmetrical in respect to the central rotor axis. For example, the cooling system may have six identical systems symmetrically distributed around the central axis of the rotor.

In the preferred embodiment, the cooling fluid is a liquid, while a big heat capacity of the cooling fluid is beneficial especially for welded rotors.

Finally, another embodiment comprises also a gas turbine comprising the rotor according to the invention.

### Brief description of the drawing

The invention, its nature as well as its advantages, shall be described in more detail below with the aid of the accompanying drawings. Referring to the drawings:
Fig. 1 shows a cross section view of one half of a gas turbine according to the invention.
Fig. 2 shows a cross section of a rotor according to the invention.
Fig. 3 to Fig. 13 show cross sections of different embodiments of the rotor according to the invention.

### Embodiments of the disclosure

The same or functionally identical elements are provided with the same designations below. The examples do not constitute any restriction of the invention to such arrangements.

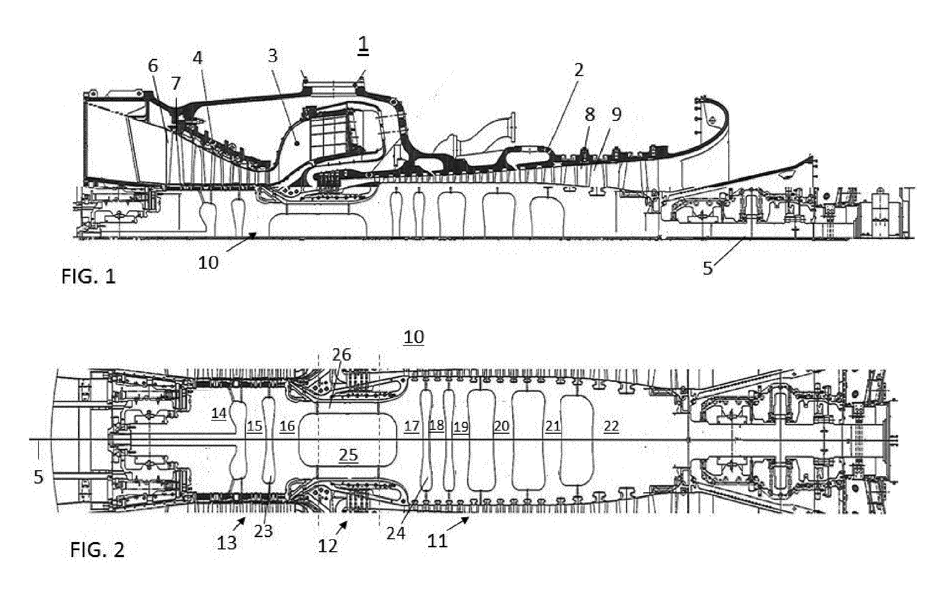

A schematic of a cross section (upper half) of a gas turbine 1 according to the invention is shown in Fig.1. The gas turbine 1 includes a compressor section 2, a combustion section 3 comprising one or more combustors, and a turbine section 4. The compressor section 2 inducts and pressurized inlet air, which is directed to the combustor section 3, but it is also used for cooling of the different parts of the gas turbine 1, such as parts of the turbine section 4. As shown in Fig. 1, the gas turbine 1 has a rotor 10 that can rotate about its central axis 5. The rotor 10 is arranged centrally in a housing to which a number of turbine stator vanes 6 and compressor stator vanes 8 are fitted. Corresponding to this, the rotor 10 is fitted with a number of rotor blades 7, 9 with the rotor blades and the stator blades forming, in pairs, the stages of the gas turbine 1.

Fig. 2 shows the rotor 10 in more details. In this embodiment according to the invention, the rotor 10 comprises a plurality of rotor disks14-22 arranged one behind the other in a rotor axis 5 and connected to one another. In this preferred embodiment, the disks are welded together i.e. the rotor 10 is welded rotor. In general, the rotor disks could be also bolted together. The rotor 10 extends from a compressor part 11 to a turbine part 13 and has a central part 12 between the compressor part 11 and the turbine part 13. In the example of Fig. 2, the turbine part 13 comprises turbine disks 14, 15 and 16, while the compressor part comprises compressor disks 17-22, and the central part comprises a rotor drum 26. The geometrical form of the disks leads to the formation of cavities between the respectively adjacent disks. For example, the turbine disks 15 and 16 create the cavity 23 between them, while the compressor disks 17 and 18 create the cavity 24. The first turbine disk 16, the last compressor disk 17 and the rotor drum 26 of the central part 12 enclose a central cavity 25. The disks 16, 17 and 26 positioned in the middle of the turbine (combustion part 3) are particularly heated during the operation, so the special attention have to be taken for the cooling of those disks of the gas turbine.

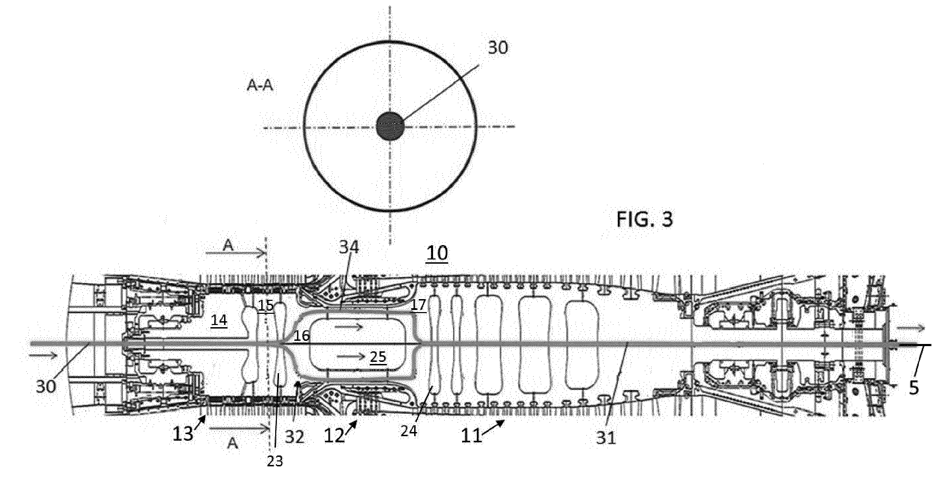

Fig. 3 shows the rotor 10 comprising a cooling system according to the invention. The cooling system according to the invention is extending at least partially through the rotor 10. The cooling system comprises at least one inlet pipe 30 configured to receive a cooling fluid, for example water or other type of liquid or gaseous fluid, at least one outlet pipe 31 configured to guide the cooling fluid outside the rotor 10, and at least one central cooling section 32 disposed between at least one inlet pipe 30 and at least one outlet pipe 31. According to the invention, the central cooling section 32 is extending at least partially through the first turbine disk 16 and the last compressor disk 17. In the example of Fig. 3, there is one inlet pipe 30 and one outlet pipe 31, which are both extending along the rotor central axis 5. Fig. 3 also shows a section cut A-A of the rotor 10 and the inlet pipe 30. Between the inlet pipe 30 and the outlet pipe 31 there are two central pipes 34 branching from the inlet pipe 30 output and coming together to the input of the output pipe 31. These two branches are going on the opposite sides of the rotor drum 26. In general, there may be more branches, for example six symmetrical branches circumferentially distributed around the central axis 5. The arrows indicated in Fig. 3 shows direction of the cooling fluid flow. In this embodiment, the fluid is flowing from the hot section (turbine) to the cold section (compressor). Advantageously, the secondary effect of the cooling is heating of the compressor section, which produces more uniform temperature distribution across the rotor.

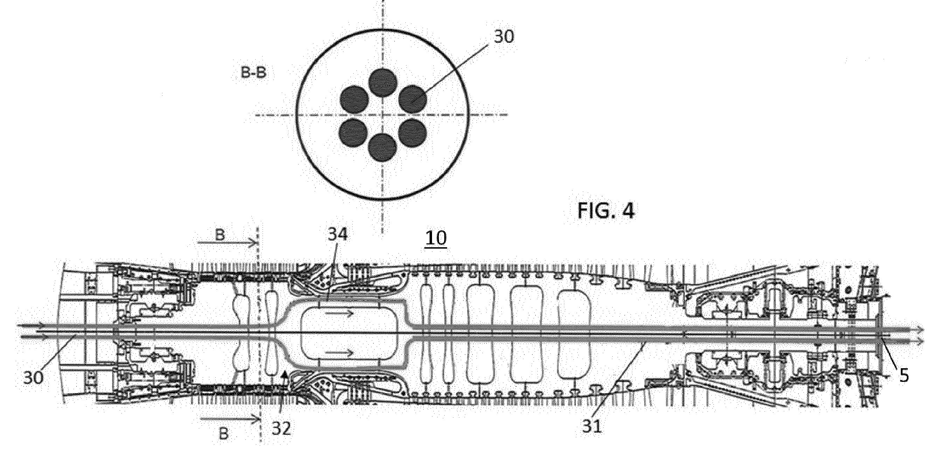

Fig. 4 shows another embodiment of the rotor 10 according to the invention. In this example, the inlet cooling pipe 30 and the outlet pipe 31 are positioned off the central axis 5. Otherwise, the structure is similar to FIG. 3, except that here there are separate pipes 34, and there is no branching from one inlet pipe 30. Fig. 4 also shows a section cut B-B of the rotor 10, and the example of six inlet pipes 30 circumferentially distributed around the central axis 5.

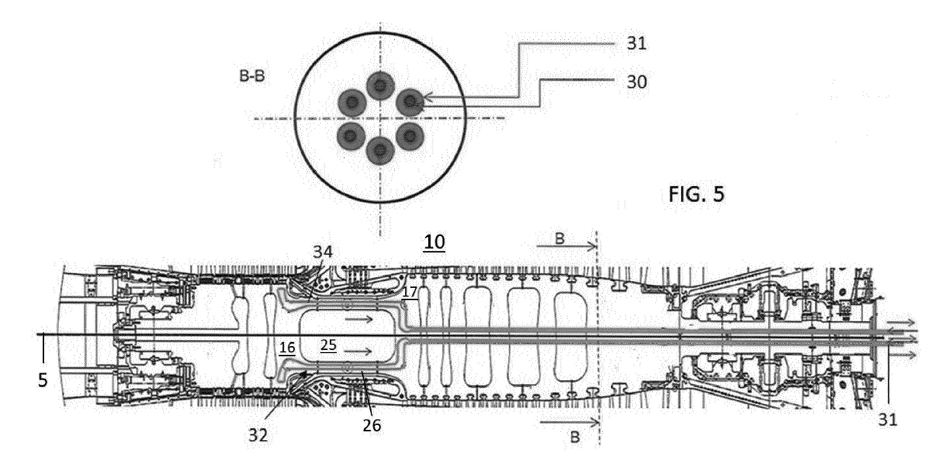

Fig. 5 shows yet another embodiment of the rotor 10 according to the invention. In this example, both the inlet pipes 30 and the outlet pipes are extending from and through the compressor part, which is the cooler part of the turbine during the operation. The central cooling section 32 here comprises the central tube 34 which is extending from the inlet pipe 30 through the disks 16, 17 and 26 and back to the outlet pipe 31 which is positioned outside the inlet pipe 30. Fig. 5 also shows a section cut B-B of the rotor 10 and the six inlet pipes 30 positioned inside the outlet pipes 31. Again, the example shows six identical circumferentially distributed cooling systems.

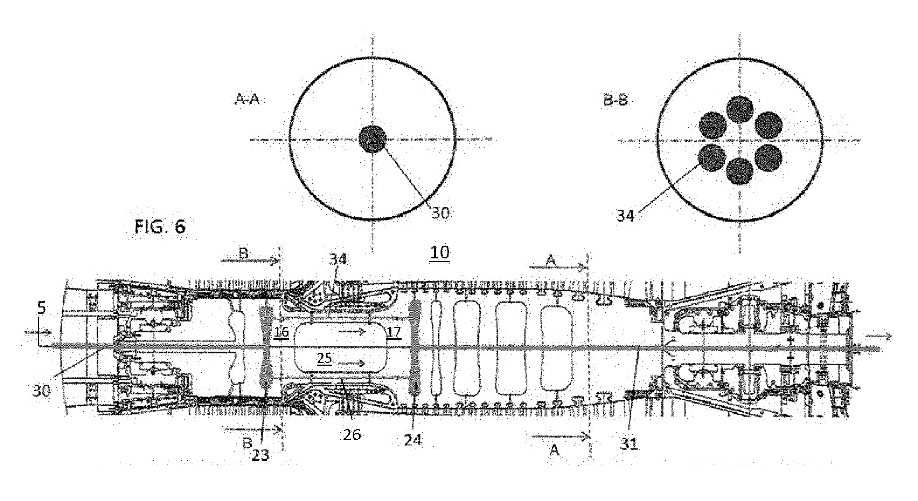

Fig. 6 shows another embodiment of the rotor 10 according to the invention. In this example, the cooling system comprises the inlet pipe 30 extending along the axis 5 until the first turbine cavity 23, which also makes a part of the cooling system. The first turbine cavity 23 and the last compressor cavity 24 are connected with one or more pipes 34 extending through the rotor drum 26. In the example on Fig. 6 they are connected with six symmetrically distributed straight pipes 34, as also shown on the section cut B-B. During the operation the cavities 23 and 24 are flooded with the cooling fluid.

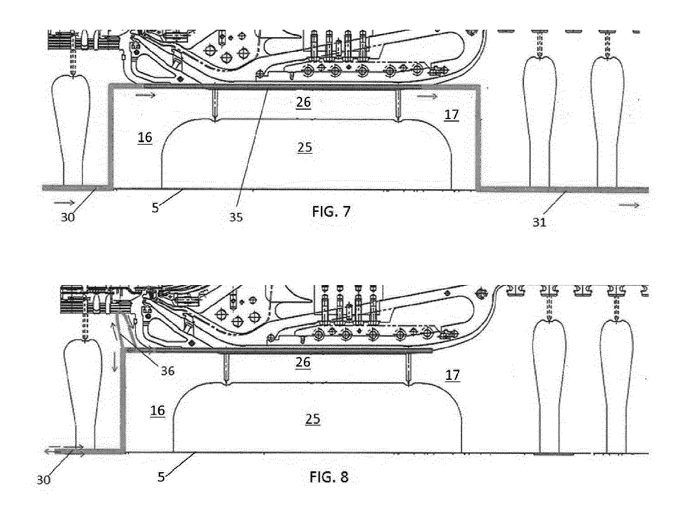

Fig. 7 shows yet another embodiment of the rotor 10 according to the invention, where only central part is shown. In this embodiment, the cooling system comprises the inlet pipe 30 extending along the central axis 5, and then the pipe is extending perpendicular, or it may extend with an angle (not shown) to the central axis 5. The pipe 30 is branched off the central axis until the input side of a cooling ring plate 35. The cooling ring plate is positioned at least partly outside the rotor drum 26. The output side of the cooling ring plate 26 is connected to the outlet pipe 31. In one preferred embodiment as shown in Fig.7, the cooling ring plate 35 completely surrounds circumferentially the rotor drum 26.

Fig. 8 shows another embodiment of the rotor 10 according to the invention, where only central part of the rotor 10 is shown. In this embodiment, the cooling system comprises the inlet pipe 30 extending along the axis 5, and it is branched off the central axis until the cooling ring plate 35 which is positioned outside the rotor drum 26. Before entering the cooling ring, the pipe 30 is branched off to an extension pipe 36 which is extending near the blade of the turbine. In this way, the blades can also be cooled effectively. The input side of the cooling ring is also used as output. The arrows show direction of the cooling fluid.

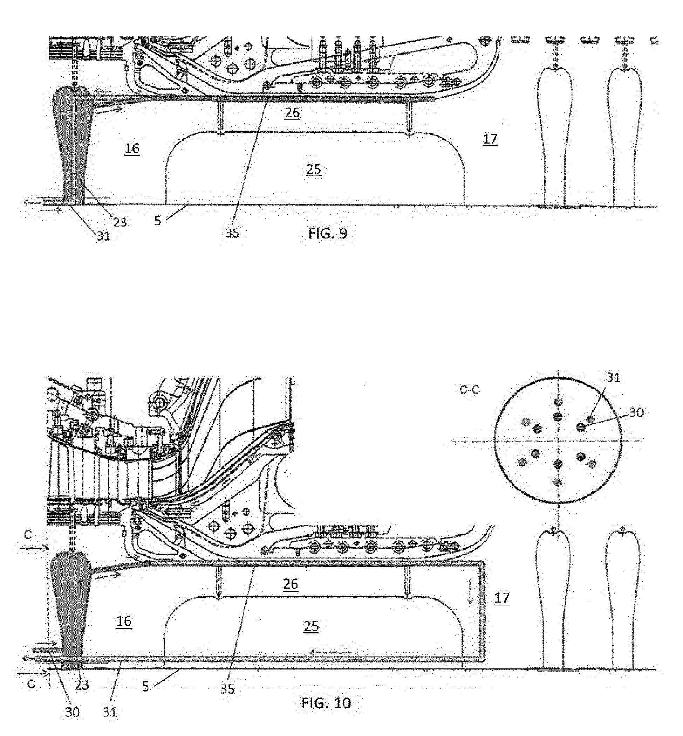

Fig. 9 shows another embodiment of the rotor 10 according to the invention. In this example the first turbine cavity 23 is a part of the cooling system including the cooling ring 35 and inlet pipe 30 and outlet pipe 31. In this example, the output pipe 31 and the inlet pipe 30 are positioned along the central axis 5, but they are not inside each other, and the inlet pipe 30 goes through the cavity 23. In general, the rotor cavity could have smaller size than illustrated in Fig 9.

Fig. 10, Fig. 11, and Fig 12 show additional embodiments of the rotor 10 according to the invention. In these examples the input pipe 30 or output pipe 31 is extending across the central cavity 25.

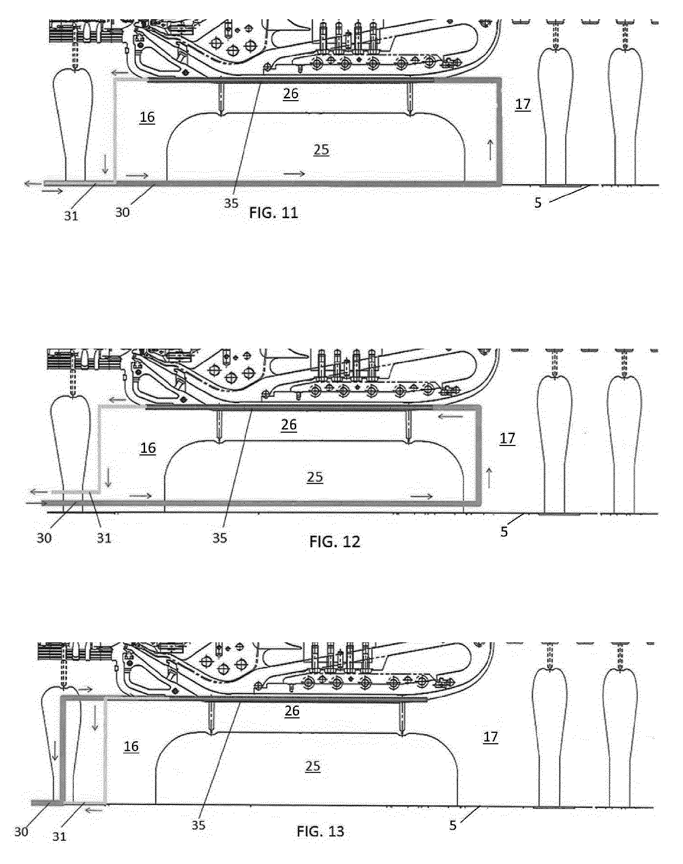

Fig. 13 is yet another embodiment of the rotor 10 according to the invention, wherein the cooling system comprises input pipe 30, output pipe 31 and the cooling ring 35.

Apart from the examples shown, the cooling feed and backflow could have also another combination than illustrated.

The embodiments of the invention are proposed to focus on cooling the rotor disks, rotor drum and to some extend to fir tree cooling in a gas turbine. The fluid medium should be transferred inside the rotor (by piping, cavities) to perform the requested cooling on the rotor. An external pump or an integrated radial pump may transfer the fluid in the rotor. The medium for the fluid may range from ambient air up to cooling fluid or oil. The preferred solution may be a circumferential cover plate, attached on top of the rotor drum flooded with cooling fluid. This cooling configuration may be employed to focus on an optimized cooling, enhancing the performance (no expensive cooling air needed) and less SAF.

It should be apparent that the foregoing relates only to the preferred embodiments of the present application and that numerous changes and modifications may be made herein by one of ordinary skill in the art without departing from the general spirit and scope of the invention as defined by the following claims.

### List of designations

- 1: Gas turbine
- 2: Compressor section
- 3: Combustion section
- 4: Turbine section
- 5: Central section
- 6: Turbine vane
- 7: Turbine blade
- 8: Compressor vane
- 9: Compressor blade
- 10: Rotor
- 11: Compressor part
- 12: Central part
- 13: Turbine part
- 14: Turbine disk
- 15: Turbine disk
- 16: First turbine disk
- 17: Last compressor disk
- 18: Compressor disk
- 19: Compressor disk
- 20: Compressor disk
- 21: Compressor disk
- 22: Compressor disk
- 23: First turbine cavity
- 24: Last compressor cavity
- 25: Central cavity
- 26: Rotor drum
- 30: Inlet pipe
- 31: Outlet pipe
- 32: Central cooling section
- 34: Central pipe
- 35: Cooling ring
- 36: Extension pipe

## Claims

1. A rotor (10) for a gas turbine comprising:
a plurality of rotor disks (14) arranged one behind the other in a rotor axis (5) and connected to one another, the geometrical form of the disks leads to the formation of cavities (23) between the respectively adjacent disks (15,16), the rotor extends from a compressor part (11) to a turbine part (13) and has a central part (12) between the compressor part (11) and the turbine part (13), wherein the first turbine disk (16), the last compressor disk (17) and the central part (12) enclose a central cavity(25);
a cooling system extending at least partially through the rotor (10) comprising at least one inlet pipe (30) configured to receive a cooling fluid, at least one outlet pipe (31) configured to guide the cooling fluid outside the rotor (10) and at least one central cooling section (32) disposed between at least one inlet pipe (30) and at least one outlet pipe (31), wherein the central cooling section (32) is extending at least partially through the first turbine disk (16) and/or the last compressor disk (17).

2. The rotor (10) according to claim 1, wherein at least two rotor disks (15, 16) are welded together, and wherein each of the compressor part (11) and the turbine part (13) comprises at least two rotor disks (15,16,17,18), and/or wherein the central part (12) comprises a rotor drum (26).

3. The rotor (10) according to claim 1 or 2, wherein the inlet pipe (30) and/or the outlet pipe(31) are/is positioned along or off the rotor axis (5).

4. The rotor (10) according to any one of the preceding claims, wherein the inlet pipe (30) is extending through the turbine part (13) or the compressor part (11), and wherein the outlet pipe (31) is extending through the compressor part (11) or the turbine part (13).

5. The rotor (10) according to any one of the preceding claims, wherein at least part of the inlet pipe (30) is positioned inside the outlet pipe (31).

6. The rotor (10) according to any one of the preceding claims, wherein the cooling system comprises the first turbine cavity (23) and/or the last compressor cavity (24).

7. The rotor (10) according to any one of the preceding claims, wherein the central cooling section (32) comprises at least one central pipe (34) extending through the central part (12).

8. The rotor (10) according to claim 7, wherein the central pipe (34) is extending at least twice through the each of the first turbine disk (16), the last compressor disk (17) and the rotor drum (26).

9. The rotor (10) according to claim 8, wherein the central pipe (34) is extending only through the upper half or the lower half of the rotor drum (26).

10. The rotor (10) according to claim 7, wherein the central pipe (34) is extending through the central cavity (25).

11. The rotor (10) according to any of the preceding claims, wherein the central cooling part (32) comprises a cooling ring (35).

12. The rotor (10) according to claim 11, wherein the cooling ring (35) is positioned at least partially outside the rotor disks.

13. The rotor (10) according to claim 11 or 12, wherein the cooling ring (35) surrounds circumferentially the rotor drum (26).

14. The rotor (10) according to any one of the preceding claims, wherein the cooling system is symmetrical in respect to the rotor axis (5).

15. A gas turbine (1) comprising the rotor (10) according to any one of the preceding claims.
